# EUROPÄISCHE PATENTANMELDUNG

(11) **EP 1 925 206 A1**
(43) Veröffentlichungstag der Anmeldung: **28.05.2008**
(21) Anmeldenummer: 07022400.1
(22) Anmeldetag: 19.11.2007
(51) Int. Cl.: A21B 3/13, A21D 8/02, B65D 81/34, B65D 5/30, B65D 5/42, B65D 5/56

(54) **Backformzuschnitt mit zugehörigem Teigwarenbelag**

(30) Priorität: 21.11.2006 DE 102006054803
(71) Anmelder: Schick, Rolf, 74223 Flein (DE)
(72) Erfinder: Schick, Rolf, 74223 Flein (DE)
(74) Vertreter: Fiesser, Gerold Michael

(57) **Zusammenfassung**

Backformzuschnitt (10), insbesondere zum Backen einer Teigware, umfassend einen Boden (1) sowie davon ausgehende Seitenwände (2) und Stirnwände (3), die von dem Boden durch Faltlinien (7,8) getrennt sind, um die Seitenwände (2) und Stirnwände (3) in einem Winkel zum Boden (1) aufzufalten , damit sich ein schachtelartiges, nach oben offenes Behältnis ergibt, wobei der Zuschnitt (10) aus einer Werkstoffbahn hergestellt ist wobei auf dem ungefalteten Zuschnitt (10) ein Teigbelag (9) angeordnet ist.

## Beschreibung

Der Gegenstand der Erfindung bezieht sich auf einen Backformzuschnitt mit zugehörigem Teigwarenbelag.

Backformzuschnitte, insbesondere zur Herstellung eines Gebäckendproduktes mittels eines Backvorganges, sind grundsätzlich bekannt. Aus den entsprechenden Zuschnitten kann oft durch Faltvorgänge ein Behältnis hergestellt werden, das in eine Raumrichtung offen ist und beispielsweise einen vorbereiteten Teigwarenbelag aufnehmen kann.

Ein ungefalteter Zuschnitt kann beispielsweise aus einer entsprechend geeigneten Werkstoffbahn hergestellt werden und umfasst häufig mindestens einen Boden, eine oder mehrere Seitenwände und eine oder mehrere Stirnwände. Die Seitenwände können vom Boden beispielsweise durch Faltlinien getrennt sein, wobei die Faltlinien der besseren Faltbarkeit dienen. Die Seiten- und/oder Stirnwände können in ihren jeweiligen Verlängerungen Laschen aufweisen, die ebenfalls mit einer oder mehreren Seiten- oder Stirnwänden durch eine Faltlinie getrennt sein können und ein Befestigungselement aufweisen können. Die jeweils andere Seiten- oder Stirnwand kann entsprechend zumindest eine Öffnung aufweisen, in die das Befestigungselement eingreifen kann. Durch das Falten des Zuschnittes entlang den Faltlinien sowie die anschließende Verbindung sämtlicher Befestigungselemente mit sämtlichen Öffnungen des Zuschnittes kann so beispielsweise ein nach einer Seite offenes Behältnis entstehen, in das ein Teigwarenbelag eingelegt werden kann. Eine solche Ausgestaltung eines Zuschnittes ist beispielsweise durch die deutschen Gebrauchsmuster G 98 00 022 und G 89 04 278 bekannt.

Die bekannten Zuschnitte weisen den Nachteil auf, dass die vorbereitete Teigware in das nach dem Falten des Zuschnittes zu einem die Teigware aufnehmenden Behältnis eingefügt werden muss. Bei diesem Einfügevorgang stört der durch den Faltvorgang der Seiten- und Stirnwände entstandene Rand, der den Boden umgibt und begrenzt, da ein gleichmäßiges Verteilen des Belages auf dem Boden, insbesondere durch einen Ausrollvorgang, nicht oder nur schwer möglich ist. Die Folge dieser ungleichmäßigen Verteilung des Belages auf dem Boden kann beispielsweise darin bestehen, dass die Belagoberseite auf ihrer gesamten Grundfläche Unebenheiten sowie unterschiedliche Dicken aufweist. Unterschiedliche Dicken bedingen wiederum häufig verschieden lange Backzeiten, so dass der Belag an der einen Stelle bereits fertig gebacken sein kann, während er an einer anderen Stelle oft noch einige Zeit zum Fertigbacken benötigt.

Hiervon ausgehend liegt der vorliegenden Erfindung die Zielsetzung zugrunde, einen Backformzuschnitt zur Verfügung zu stellen, der die Herstellung eines Gebäckendproduktes noch weiter vereinfacht und zu einem Gebäckendprodukt mit verbesserten Eigenschaften führt.

Diese Aufgabe wird erfindungsgemäß durch einen Zuschnitt mit den Merkmalen des Anspruchs 1 gelöst. Vorteilhafte Weiterbildungen und Ausgestaltungen des erfindungsgemäßen Zuschnittes sind Gegenstand der anhängigen Ansprüche.

Der aus einer Werkstoffbahn hergestellte erfindungsgemäße Zuschnitt umfasst mindestens einen Boden sowie davon ausgehende Seitenwände und Stirnwände, die von dem Boden durch Faltlinien getrennt sind. Indem die Stirnwände und Seitenwände entlang den Faltlinien in einem Winkel zu dem Boden gefaltet werden können, entsteht ein schachtelartiges, nach oben offenes Behältnis. Die erfindungsgemäße Ausgestaltung des Zuschnittes besteht darin, den Belag, insbesondere die fertig hergestellte Teigware, auf dem noch nicht gefalteten Zuschnitt anzuordnen und erst dann den Zuschnitt zu einem Behältnis zu falten. *Grundsätzlich kann ein erfindungsgemäßer Zuschnitt nach dem Falten eine beliebige Grundfläche aufweisen, beispielsweise rund, oval oder eckig, insbesondere dreieckig oder viereckig oder fünfeckig. Ebenso geeignet sind Grundformen, die Figuren nachempfunden sind, beispielsweise Tierformen, Sternformen und dergleichen. In diesem Zusammenhang sei darauf hingewiesen, dass sich die anspruchsgemäße Einteilung in "Seitenwände" und "Stirnwände" auf alle oben genanten Formen bezieht, sofern sie durch das Auffalten von mindestens zwei Faltelementen am Zuschnitt erhältlich sind. So kann beispielsweise eine Rundform durch das Auffalten von zwei halbkreisartigen Faltelementen um einen Kreis erhalten werden, die auffaltbaren halbkreisartigen Faltelemente erfüllen dabei die anspruchsgemäße Einteilung in "Seitenwände" und "Stirnwände*".

Durch diese erfindungsgemäße Ausgestaltung des Zuschnittes wird die Möglichkeit geschaffen, die Herstellung des Gebäckendproduktes aus dem Teigwarenbelag, insbesondere durch einen Backvorgang, zu vereinfachen und zu beschleunigen. Durch die erfindungsgemäße Ausgestaltung des den Teigwarenbelag bereits umfassenden Zuschnittes werden die vorstehend beschriebenen Nachteile vermieden. Indem der hergestellte, sich aber noch im Rohzustand befindende Belag auf dem noch nicht gefalteten Zuschnitt angeordnet wird, wird erreicht, dass eine gleichmäßige Verteilung des Belages, insbesondere durch einen Ausrollvorgang, gewährleistet werden kann. Hierdurch kann die Dicke des Belages über seine gesamte Grundfläche gleichmäßig ausgestaltet werden, was wiederum zu einer einheitlichen Backzeit für den gesamten Belag führt.

Durch die erfindungsgemäße Ausgestaltung wird darüber hinaus ein hygienischer Herstellungsprozess des Gebäckendproduktes erreicht. Bei den aus dem Stand der Technik bekannten Zuschnitten erfolgt die Einfügung des Belages durch den Verbraucher, der den Belag vorwiegend mittels seiner Hände unter Zuhilfenahme von Küchengeräten, insbesondere Teigschabern, in das hergestellte Behältnis einfügt und sodann auf dem Boden verteilt. Die erfindungsgemäße Ausgestaltung kann demgegenüber maschinell hergestellt werden.

Nach einer weiteren vorteilhaften Ausgestaltung des Zuschnittes wird vorgeschlagen, dass die Grundfläche des Belages größer ist als die des Bodens, so dass sich der Belag über die Faltlinien auf die Seitenwände und Stirnwände, allerdings höchstens bis zu deren Rändern, hinaus erstreckt. Gemäß einer weiteren Ausführungsform der Erfindung wird vorgeschlagen, dass der Belag auf den Seitenwänden und Stirnwänden in einem Abstand zu den den Boden umgebenden Faltlinien endet. Hierdurch wird erreicht, dass auch der nach der Umfaltung der Seitenwände und Stirnwände entstehende Randbereich mit Belag bedeckt ist, der umlaufend eine einheitliche Dicke besitzt und in einer bestimmten, zum Boden beabstandeten Höhe endet. Durch die beispielsweise gleichmäßige Höhe des umlaufenden Randes des Belages kann darüber hinaus eine gleichmäßige Verteilbarkeit eines weiteren auf dem Belag anzuordnenden Belages erreicht werden. Die Menge des weiteren Belages, die auf dem Belag anzuordnen ist, kann hierdurch im Voraus bestimmt werden. Dies führt zu einer Vereinfachung des Herstellungsvorganges des Gebäckendproduktes.

Der den Belag aufnehmende Zuschnitt kann im Verwendungsfall zu einem Behältnis gefaltet werden. *Damit das Behältnis nach dem Falten eine ausreichende dimensionale Stabilität aufweist können grundsätzlich beliebige Maßnahmen vorgesehen werden, die beispielsweise eine Versteifung des gefalteten Behälters bewirken. Es hat sich erfindungsgemäß jedoch bewährt, wenn ein erfindungsgemä-ßer Zuschnitt Mittel aufweist, die eine stabilisierende Verbindung zumindest eines Teils der durch den Faltvorgang aufgestellten Wände erlauben. Grundsätzlich ist dabei jede beliebige Art der Verbindung geeignet, beispielsweise Klebeverbindungen oder formschlüssig ausgeführte Verbindungen wie Steckverbindungen, beispielsweise in der nachfolgend beschriebenen Weise.*

*Zur Herstellung von Klebeverbindungen eignen sich grundsätzlich alle Kontakt- oder Haftklebstoffe, die eine entsprechende Stabilisierung des gefalteten Zuschnitts erlauben. Besonders geeignet sind Klebstoffe, welche die Qualität des Produkts, insbesondere die Eignung zum menschlichen Verzehr im Wesentlichen nicht nachteilig beeinflussen. Weiterhin sind solche Klebstoffe geeignet, die so hitzebeständig sind, dass die Formstabilität des gefalteten Zuschnitts beim Backen zumindest nicht soweit abnimmt, dass ein gewünschtes Formergebnis für eine erhaltene Backware nicht mehr erreicht werden kann. Besonders geeignet sind beispielsweise Haftklebstoffe oder Kontaktklebstoffe, deren Klebefläche mit einem abziehbaren Linerversehen ist, so dass ein versehentliches Verkleben, beispielsweise bei der Verpackung, beim Transport oder bei der Entnahme vermieden wird.*

Weiterhin wird im Rahmen der vorliegenden Erfindung vorgeschlagen, dass die Seitenwände in ihrer Verlängerung zumindest eine Lasche aufweisen, die entlang einer Faltlinie zu der Seitenwand in einem Winkel faltbar sind und ein Befestigungselement aufweisen. Die Lasche ist beispielsweise rund oder als n-Eck, beispielsweise etwa dreiecksförmig, ausgestaltet und in dem Zwischenraum zwischen einer Seitenwand und einer Stirnwand angeordnet. Die Lasche kann beispielsweise an einer Ecke einer in etwa dreiecksförmigen Ausgestaltung pfropfenförmig nach außen ausgestülpt sein, wodurch ein Befestigungselement gebildet werden kann. Denkbar sind jedoch auch andere Formen der Ausstülpung, beispielsweise dreiecksförmig, rechteckig oder rund. Durch diese Ausgestaltung des Befestigungselementes wird eine sichere und haltbare Verbindbarkeit mit weiteren Elementen des Zuschnittes garantiert.

Nach einer noch weiteren vorteilhaften Ausgestaltung des erfindungsgemäßen Zuschnittes wird vorgeschlagen, dass sich die beschriebenen Laschen in einer Verlängerung der Stirnwände befinden. Das in der Lasche beinhaltete Befestigungselement ist ebenso wie in der vorstehend beschriebenen Ausgestaltungsform ausgeführt. Hierdurch wird eine flexible Anordnung der Verbindungselemente (Befestigungselement und Öffnung) in den entsprechend der Form der Gebäckendprodukte herzustellenden Formen der Zuschnitte garantiert.

Gemäß einer noch weiteren vorteilhaften Ausgestaltung des Zuschnittes wird vorgeschlagen, dass die Stirnwände zumindest eine Öffnung zur Aufnahme eines Befestigungselementes aufweisen. Alternativ können auch die Seitenwände eine entsprechende Öffnung aufweisen. Die Öffnung kann beispielsweise schlitzförmig ausgestaltet sein. Indem ein Befestigungselement in eine Öffnung hineingreift, wird eine formschlüssige Verbindung zwischen der Seitenwand und der Stirnwand hergestellt, die während des Herstellungsvorgangs des Gebäckendproduktes, insbesondere des Backvorganges, nicht gelöst werden kann. Hierdurch wird erreicht, dass der Belag während des Herstellungsvorganges seine durch die Umfaltung gegebene Form beibehält. Darüber hinaus können die Befestigungselemente nach dem Herstellungsvorgang einfach aus den Öffnungen herausgezogen werden, um das Gebäckendprodukt leicht dem Behältnis entnehmen zu können.

Grundsätzlich eignen sich als Werkstoff zur Ausgestaltung des Zuschnitts alle Werkstoffe, die beispielsweise eine ausreichende Hitzebeständigkeit und Lebensmittelverträglichkeit aufweisen und zur Herstellung von Backwaren aus Teigbelägen einsetzbar zu sein. Sofern ein Werkstoff selbst keine ausreichende Lebensmittelveträglichkeit aufweist oder aus sonstigen Gründen nicht in direkten Kontakt mit dem Teigbelag kommen soll, kann ein entsprechender Werkstoff auch als Teil eines Werkstoffverbunds eingesetzt werden und beispielsweise durch eine entsprechende lebensmitteltaugliche Beschichtung vom Belag getrennt sein.

Geeignet ist beispielsweise teilweise Ausgestaltung des Zuschnittes aus Pappe oder Kunststoff.

*Es ist im Rahmen der vorliegenden Erfindung ebenfalls möglich, den Zuschnitt aus biologisch verwertbaren Materialien zu formen. Unter "biologisch verwertbaren Materialen werden im Rahmen der vorliegenden Erfindung Materialien verstanden, die einerseits für den Zweck der Erfindung ausreichende Materialeigenschaften aufweisen und andererseits durch lebende Organismen zumindest zersetzbar sind. Zu den biologisch verwertbaren Materialien im Sinne der Erfindung zählen beispielsweise Materialien, die sich in einer geeigneten Umgebung, beispielsweise auf einer Deponie, im Komposthaufen oder in freier Natur, in einem Zeitraum von weniger als etwa 10 Jahren, insbesondere von weniger als etwa 5 Jahren zu mindestens 50% zersetzen. Ebenfalls zu den biologisch verwertbaren Materialien im Sinne der Erfindung zählen Materialen, die für Tiere oder insbesondere Menschen essbar sind. Geeignete biologisch verwertbaren Materialien können beispielsweise auf Basis von Kohlehydraten wie Cellulose oder Stärke oder auf Basis von Proteinen aufgebaut sein.*

Nach einem noch weiteren Vorschlag weist der Zuschnitt auf seiner zu dem Belag gewendeten Seite eine Beschichtung auf, die beispielsweise antihaftend wirkt. Als Beschichtung eignen sich beispielsweise Metallfolien wie Aluminiumfolie oder die Haftung verringernde Kunststoffe wie Teflon. Es kann dadurch vermieden werden, dass der Belag während des Herstellungsvorganges des Gebäckendproduktes an dem Zuschnitt festbackt, so dass er nach dem Herstellungsvorgang nicht oder nur mit Schwierigkeiten, die zu einem Verlust eines Teiles des gebackenen Belages führen können, von dem Boden lösbar ist. *Es ist erfindungsgemäß ebenfalls vorgesehen, dass ein entsprechender haftungsverringernder Belag aus biologisch verwertbaren Materialien besteht.*

Nach einer noch weiteren vorteilhaften Ausgestaltung des Zuschnittes wird vorgeschlagen, dass die Ränder der Seitenwände und/oder Stirnwände wenigstens teilweise wellenförmig ausgestaltet sein. Hierdurch sind Materialersparnisse erzielbar.

Bevorzugt ist des Weiteren eine Ausgestaltung des Zuschnittes, bei der der auf dem Zuschnitt angeordnete Belag im Bereich der Faltlinien vorzugsweise eine umlaufende Einkerbung hat. Hierdurch wird vermieden, dass bei der Umfaltung des Zuschnittes und des sich darauf befindenden Belages im Bereich der Faltlinien Auswölbungen des Belages entstehen, die dadurch bedingt sind, dass in diesen Bereichen mehr Belag vorhanden ist, als zur Herstellung des Gebäckendprodukt benötigt wird. Ohne diese Einkerbung entstünden im Bereich der Faltlinien Zonen überschüssigen Belages, die wiederum aufgrund ihrer von der übrigen Grundfläche des Belages verschiedenen Dicke zu unterschiedlich langen Herstellungsvorgängen, insbesondere Backzeiten, führten.

Weitere Vorteile und Einzelheiten der Erfindung werden anhand der in den Zeichnungen dargestellten Ausführungsbeispiele erläutert, ohne dass der Gegenstand der Erfindung auf dieses konkrete Ausführungsbeispiel beschränkt wird. Es zeigen:
Fig. 1: einen Zuschnitt in einer Draufsicht,
Fig. 2: einen Teil eines Zuschnittes im Querschnitt.

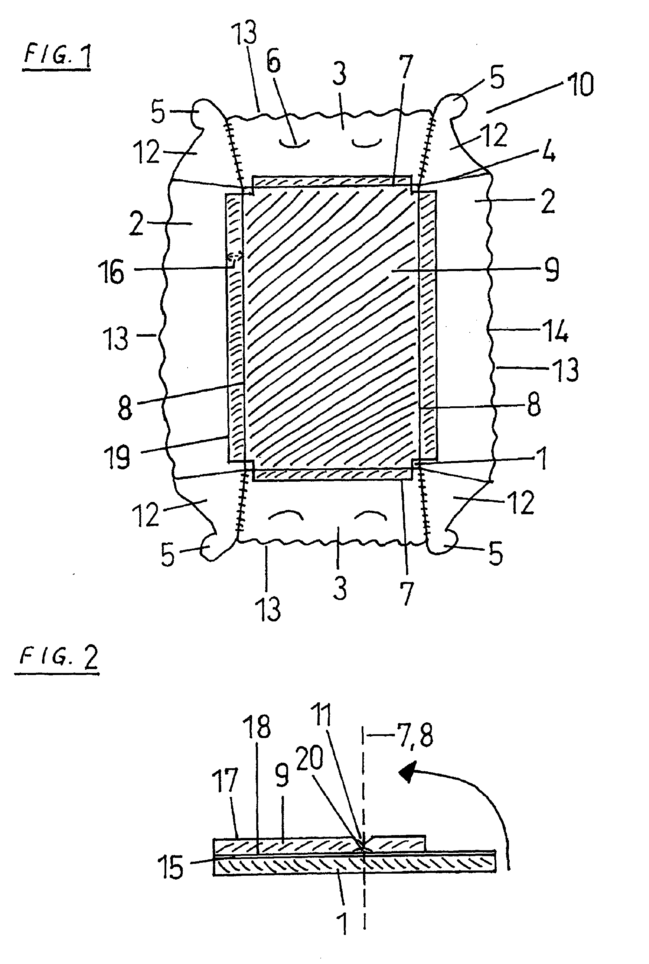

In den Figuren 1 und 2 ist ein Zuschnitt 10 dargestellt. Der Zuschnitt weist einen Boden 1 und jeweils zwei Seitenwände 2 sowie jeweils zwei Stirnwände 3 auf. Der Boden 1 ist von den Stirnwänden durch die Faltlinie 7 und von den Seitenwänden durch die Faltlinie 8 getrennt. Auf dem Boden 1 sowie einem Teil der Seitenwände 2 sowie der Stirnwände 3 ist der Belag 9 angeordnet, der mittels einer Schattierung gekennzeichnet ist. In der Verlängerung der Seitenwände 2 sind Laschen 12 angeordnet, die von der Seitenwand 2 durch eine Faltlinie 4 getrennt sind. Die Laschen 12 sind in etwa dreiecksförmig ausgestaltet. Die Lasche 12 besitzt in der Ecke, die an der Stirnwand 3 anliegt, jedoch nicht dieser verbunden ist, und die den äußeren Rand des Zuschnittes darstellt, ein Befestigungselement 5 auf, das in der Darstellung gemäß Fig. 1 pfropfenförmig ausgestaltet ist. Dieses Befestigungselement 5 wird nach dem Faltvorgang, der in den Figuren nicht dargestellt ist, in die Öffnungen 6 in der Stirnwand 3 eingeschoben. Das Befestigungselement 5 der Lasche 12 dient damit der formschlüssigen Verbindung der Seitenwand 2 mit der Stirnwand 3. Fig. 1 ist aufgrund der durchgestrichenen Linie zwischen Stirnwand 3 und Lasche 12 entnehmbar, dass zwischen Stirnwand 3 und Lasche 12 keine Verbindung besteht.

Bei dem - nicht dargestellten - Faltvorgang werden die Seitenwände 2 entlang der Faltlinie 8 in einem Winkel zu dem Boden 1 gefaltet. Das gleiche trifft auf die Faltung der Stirnwände 3 entlang der Faltlinie 7 zu. Nach diesem Faltvorgang entsteht ein Behältnis, das mittels der Befestigungselemente 5 der Laschen 12 in einer Behältnisform fixiert wird.

Zwischen den Faltlinien 7 und 8, die den Boden 1 begrenzen, und der Außenkontur 19 des Belages 9 besteht der Abstand 16, um den der Belag die Grundfläche des Bodens 1 überlappt. Wie der Darstellung in Fig. 1 entnehmbar ist, erstreckt sich der Belag 9 nur auf die Seitenwände 2 und die Stirnwände 3. Eine Erstreckung auf die Laschen 12 findet nicht statt. Da sich die Laschen 12 nach dem Faltvorgang, von der Innenseite des Behältnisses aus betrachtet, hinter den Stirnwänden 3 befinden, darf eine Überlappung auch nicht stattfinden.

Die Stirnwände 3 sowie die Seitenwände 2 haben im noch nicht gefalteten Zustand Ränder 13, die nach dem Faltvorgang die Oberkanten des Behältnisses darstellen, wobei die Ränder 13 Ausnehmungen 14 aufweisen, die in Fig. 1 wellenförmig ausgeführt sind.

Nach dem - nicht näher dargestellten - Faltvorgang bildet die Außenkontur 19 des Belages 9 die obere Kante des Gebäckendproduktes.

In Fig. 2 ist ein Teil des erfindungsgemäßen Zuschnittes 10 im Querschnitt dargestellt. Die untere der dargestellten Schichten ist der Boden 1, die obere Schicht ist der Belag 9. Zwischen diesen beiden Schichten ist in Form eines Sandwichs die Beschichtung 15 angeordnet, die vorzugsweise als Antihaftbeschichtung dafür sorgt, dass der Belag 9 während des Herstellungsvorganges nicht an dem Boden 1 festbackt. Der Belag 9 hat eine Oberseite 17 sowie eine Unterseite 18. Die gestrichelt gekennzeichnete Linie 8 ist die Faltlinie, um die der Boden 1 und der Belag 9 während des Faltvorganges gefaltet werden. Der eingezeichnete Pfeil zeigt die Faltrichtung von rechts unten nach links oben.

Wie der Fig. 2 entnehmbar ist, erstreckt sich der Belag 9 über die Faltlinie 8 auf die Seitenwände 2 bzw. Stirnwände 3. Der Belag 9 überlappt insofern die Seitenwände 2 bzw. die Stirnwände 3. Hierdurch wird nach dem Faltvorgang ein Rand gebildet, der den Boden 1 umlaufend umgibt.

Zusätzlich ist in Fig. 2 die Einkerbung 11 in der Oberseite 17 des Belages 9 eingezeichnet. Auf der Unterseite 18 des Belages 9 ist die Einkerbung 20 eingezeichnet. Die Einkerbung 11 bzw. Einkerbung 20 sind in den Belag 9 an der Stelle eingefügt, an der der Faltvorgang anhand entlang der Faltlinie 8 erfolgt. Die Faltlinie 8 durchläuft insofern die Einkerbung 11 bzw. die Einkerbung 20.

### Bezugszeichenliste

- 1: Boden
- 2: Seitenwand
- 3: Stirnwand
- 4: Faltlinie
- 5: Befestigungselement
- 6: Öffnung
- 7: Faltlinie
- 8: Faltlinie
- 9: Belag
- 10: Zuschnitt
- 11: Einkerbung
- 12: Lasche
- 13: Rand
- 14: Ausnehmung
- 15: Beschichtung
- 16: Abstand
- 17: Oberseite
- 18: Unterseite
- 19: Außenkontur
- 20: Einkerbung

## Patentansprüche

1. Backformzuschnitt (10), insbesondere zum Backen einer Teigware, umfassend einen Boden (1) sowie davon ausgehende Seitenwände (2) und Stirnwände (3), die von dem Boden durch Faltlinien (7, 8) getrennt sind, um die Seitenwände (2) und Stirnwände (3) in einem Winkel zum Boden (1) aufzufalten, damit sich ein schachtelartiges, nach oben offenes Behältnis ergibt,
wobei der Zuschnitt (10) aus einer Werkstoffbahn hergestellt ist, **dadurch gekennzeichnet, dass** auf dem ungefalteten Zuschnitt (10) ein Teigbelag (9) angeordnet ist.

2. Zuschnitt (10) nach Anspruch 1, **dadurch gekennzeichnet, dass** die Grundfläche des Teigbelages (9) größer ist als die Grundfläche des Bodens (1),
wobei sich die Grundfläche des Teigbelages höchstens bis zu den Rändern (13) der Seitenwände (2) und/oder Stirnwände (3) erstreckt und in einem Abstand (16) zu den den Boden (1) begrenzenden Faltlinien (7, 8) endet.

3. Zuschnitt (10) nach Anspruch 1 oder 2, **dadurch gekennzeichnet, dass** die Seitenwände (2) und die Stirnwände (3) durch geeignete Befestigungspunkte miteinander verbindbar sind.

4. Zuschnitt (10) nach einem der vorhergehenden Ansprüche, **dadurch gekennzeichnet, dass** die Seitenwände (2) und die Stirnwände (3) durch Verkleben oder durch formschlüssig wirkende Befestigungselemente miteinander verbindbar sind.

5. Zuschnitt (10) nach einem der vorhergehenden Ansprüche, **dadurch gekennzeichnet, dass** die Seitenwände (2) zumindest eine Lasche (12) aufweisen, die entlang einer Faltlinie (4) in einem Winkel zu der Seitenwand (2) faltbar ist und ein Befestigungselement (5) umfasst.

6. Zuschnitt (10) nach einem der vorhergehenden Ansprüche, **dadurch gekennzeichnet, dass** die Stirnwände (2) zumindest eine Lasche (12) aufweisen, die entlang einer Faltlinie (4) in einem Winkel zu der Stirnwand (2) faltbar ist und ein Befestigungselement (5) umfasst.

7. Zuschnitt (10) nach einem der Ansprüche 1 bis 3, **dadurch gekennzeichnet, dass** die Stirnwände (3) zumindest eine Öffnung (6) zur Aufnahme des Befestigungselementes (5) aufweisen.

8. Zuschnitt (10) nach einem der Ansprüche 1, 2 oder 4, **dadurch gekennzeichnet, dass** die Seitenwände (2) zumindest eine Öffnung (6) zur Aufnahme des Befestigungselementes (5) aufweisen.

9. Zuschnitt (10) nach einem der vorhergehenden Ansprüche, **dadurch gekennzeichnet, dass** der Zuschnitt (10) wenigstens teilweise aus Pappe oder aus Kunststoff gebildet ist.

10. Zuschnitt (10) nach einem der vorhergehenden Ansprüche, **dadurch gekennzeichnet, dass** der Zuschnitt (10) auf seiner zu dem Teigbelag (9) gewandten Oberseite mit einer Beschichtung (15), vorzugsweise einer Antihaftbeschichtung, insbesondere aus Aluminium, versehen ist.

11. Zuschnitt (10) nach einem der vorhergehenden Ansprüche, **dadurch gekennzeichnet, dass** der Rand (13) wenigstens teilweise wellenförmig (14) ausgebildet ist.

12. Zuschnitt (10) nach einem der vorhergehenden Ansprüche, **dadurch gekennzeichnet, dass** der Teigbelag (9) im Bereich der Faltlinie (7, 8) mit einer vorzugsweise umlaufenden Einkerbung (11) versehen ist.

13. Verfahren zum Herstellen eines Gebäckendproduktes unter Verwendung eines Zuschnitts nach einem der vorhergehenden Ansprüche,
wobei in einem ersten Schritt der Teigbelag auf den noch nicht gefalteten Zuschnitt aufgebracht wird und
in einem zweiten Schritt der Zuschnitt zu einem Behältnis gefaltet wird.
